# EUROPEAN PATENT APPLICATION

(11) **EP 3 290 945 A1**
(43) Date of publication of application: **07.03.2018**
(21) Application number: 16186946.6
(22) Date of filing: 02.09.2016
(51) Int. Cl.: G01S 7/40, G01S 13/93

(54) **MISALIGNMENT DETECTION FOR A VEHICLE RADAR SENSOR**

(71) Applicant: Autoliv Development AB, 447 83 Vårgårda (SE)
(72) Inventor: Zhou, Yi, 82194 Gröbenzell (DE)
(74) Representative: Sandstedt, Jonas Sven James

(57) **Abstract**

The present disclosure relates to a vehicle radar system (2) comprising a radar transceiver (3) arranged to:
Acquire a first stationary object detection (6) at a first time instant (t₁) with a detected distance (d₁) to the first stationary object detection (6).
Acquire at least one following stationary object detection (6', 6") for the same object at corresponding following time instant s(t₂, t₃).

For each following stationary object detection (6', 6") a processing unit (4) is arranged to:
Determine a corresponding calculated stationary object (8) using detected distance (d₁) and vehicle data.
Determine a misalignment error angle (Δϕ₁, Δϕ₁) between a detection line (7', 7"), running to the present following stationary object detection (6', 6"), and a calculated line (9, 9'), running to the corresponding calculated stationary object (8, 8).

A final misalignment error angle (Δϕ) is determined as a mean value of said misalignment error angles (Δϕ₁, Δϕ₂).

## Description

### DESCRIPTION OF THE DISCLOSURE

The present disclosure relates to a vehicle radar system arranged to detect objects outside a vehicle. The radar system comprises a radar transceiver and a processing unit.

Today, a radar device may be mounted on a vehicle in order to detect reflections from objects in a traveling direction in order to implement functions of speed control and collision prevention. In such a radar device it is required to obtain an azimuth angle in the form of a target bearing angle, a distance with respect to the object and a relative speed between the vehicle and the object.

For most vehicle radar applications it is important to measure the target bearing, azimuth, angle with a relatively high degree of precision. The angle accuracy of a radar system depends on fundamental parameters like number of receive channels, component tolerances, assembly precision and installation conditions. Furthermore, due to various environmental influences such as mechanical stress, mounting error or even impact damage, the angle estimation performance might suffer additionally. Some of those error sources show a random statistical distribution while others lead to a fixed angle offset. This fixed offset is constituted by a misalignment angle, and detecting the misalignment angle is often an essential requirement in vehicle radar systems.

Addressing the above problems, the document WO 2014/003615 discloses a method where a possible zero crossing is found for a derivative of a function describing the progression of detected target Doppler velocity as a function of detected target angle.

If there is such a zero crossing, it is indicative of radar system misalignment.

However, it is an object of the present disclosure to present an alternative and less complicated device and a method for vehicle radar angle error detection.

Said object is achieved by means of a vehicle radar system arranged to detect objects outside a vehicle. The radar system comprises a radar transceiver and a processing unit, where the radar transceiver is arranged to:
- Acquire a first stationary object detection at a first time instant and to provide a detected distance between the radar transceiver and the first stationary object detection.
- Acquire at least one following stationary object detection for the same object at a corresponding following time instant for each following stationary object detection.

For each following stationary object detection, the processing unit is arranged to:
- Determine a corresponding calculated stationary object by means of said detected distance and vehicle data comprising at least present vehicle velocity.
- Determine a misalignment error angle between a detection line, running between the radar transceiver and the present following stationary object detection, and a calculated line, running between the radar transceiver and the corresponding calculated stationary object.

The processing unit is furthermore arranged to determine a final misalignment error angle as a mean value of said misalignment error angles.

Said object is also achieved by means of a method for a vehicle radar system used for detecting objects outside a vehicle and using a radar transceiver. The method comprises:
- Acquiring a first stationary object detection at a first time instant and providing a detected distance between the radar transceiver and the first stationary object detection.
- Acquiring at least one following stationary object detection (for the same object at a corresponding following time instant for each following stationary object detection.

For each following stationary object detection, the method further comprises:
- Determining a corresponding calculated stationary object using said detected distance and vehicle data comprising at least present vehicle velocity.
- Determining a misalignment error angle between a detection line, running between the radar transceiver and the present following stationary object detection, and a calculated line, running between the radar transceiver and the corresponding calculated stationary object.

The method furthermore comprises:
- Determining a final misalignment error angle as a mean value of said misalignment error angles.

According to an example, when a first final determined misalignment error angle has been determined, the processing unit is arranged to determine one or more further final misalignment error angles by means of one or more corresponding repetitions of the procedure for determining the first final determined misalignment error angle.

According to an example, between each time instant the time of a radar cycle passes. In this context, a radar cycle is one observation phase during which the vehicle radar system is arranged to acquire data, process said data on several signal processing levels and to send out available results.

Other examples are disclosed in the dependent claims.

A number of advantages are obtained by means of the present disclosure. Mainly, a relatively uncomplicated and reliable device and method for vehicle radar angle error estimation is provided.

### BRIEF DESCRIPTION OF THE DRAWINGS

The present disclosure will now be described more in detail with reference to the appended drawings, where:
Figure 1 shows a schematic top view of a vehicle with a radar system travelling on a road; and
Figure 2 shows a flowchart for methods according to the present disclosure.

### DETAILED DESCRIPTION

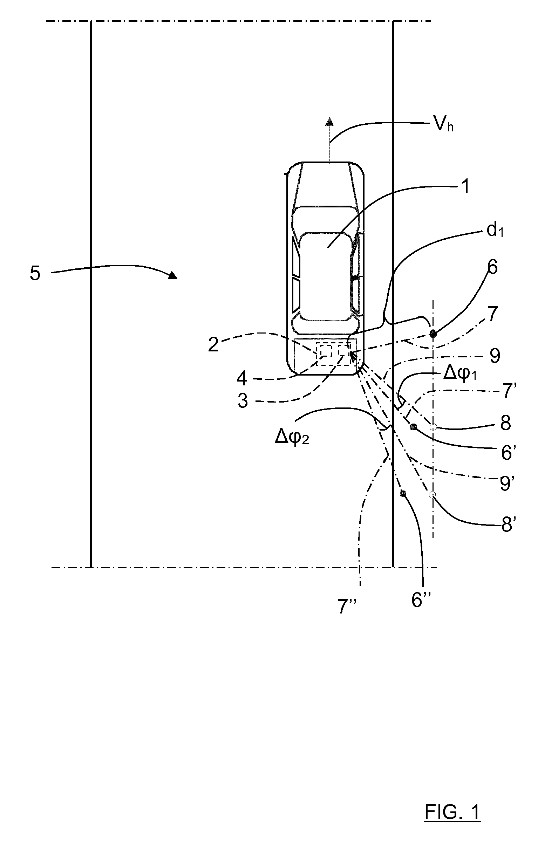

With reference to Figure 1, a vehicle 1 comprises a radar system 2, which in turn comprises a radar transceiver 3 and a processing unit 4. The vehicle 1 is moving on a road 5 with a certain vehicle velocity vₕ, where the roads comprises fence posts; in Figure 1 only one fence post is discussed for a number of time instants. No real fence posts are shown in Figure 1 for reasons of clarity; only detected fence posts and calculated fence post are shown at said time instants; firstly a first time instant t₁ will be discussed.

At the first time instant t₁, a first fence post detection 6 is acquired by the radar transceiver 3, and a detected distance d₁ between the radar transceiver 3 and the first fence post detection 6 along a first detection line 7 is stored in the radar system 2. The detected distance d₁ is stored.

At a second time instant t₂ following the first time instant t₁, a second fence post detection 6' is acquired by the radar transceiver 3, the second fence post detection 6' being related to the same fence post as the first fence post detection 6.

According to the present disclosure, for the second time instant t₂, the processing unit 4 is arranged to determine a first calculated fence post 8 that corresponds to the second fence post detection 6'. Due to misalignment error, there is first misalignment error angle Δϕ₁ between a second detection line 7' and a first calculated line 9. The second detection line 7' runs between the radar transceiver 3 and the second fence post detection 6', and the first calculated line 9 runs between the radar transceiver 3 and the first calculated fence post 8.

At a third time instant t₃ following the second time instant t₂, a third fence post detection 6" is acquired by the radar transceiver 3, the third fence post detection 6" being related to the same fence post as the first fence post detection 6 and the second fence post detection 6'.

Furthermore, for the third time instant t₃, the processing unit 4 is arranged to determine a second calculated fence post 8' that corresponds to the third fence post detection 6". Due to misalignment error, there is second misalignment error angle Δϕ₂ between a third detection line 7" and a second calculated line 9'. The third detection line 7" runs between the radar transceiver 3 and the third fence post detection 6", and the second calculated line 9' runs between the radar transceiver 3 and the second calculated fence post 8'.

The misalignment error angles Δϕ₁, Δϕ₂ are azimuth bearing angles, and are determined by the processing unit 4. The above procedure is according to some aspects repeated a number of times, and a final determined misalignment error angle Δϕ is finally determined as a mean value of the misalignment error angles Δϕ₁, Δϕ₂.

The processing unit 4 is arranged to determine the calculated fence posts 8' by means of the stored detected distance d₁ and vehicle data mainly comprising present vehicle velocity vₕ. According to some aspects, the detected distance d₁ is acquired from range measurements which have a very high degree of accuracy, for example using a 77 GHz radar wideband radar transceiver 3.

According to some aspects, other vehicle data comprise yaw rate data. According to some aspects, when a final determined misalignment error angle Δϕ has been determined, the procedure is repeated and a new detected distance for a stationary object is stored. The repetition may be performed immediately after when a final determined misalignment error angle Δϕ has been determined, or after a certain delay that can be adaptive.

According to some aspects, between each time instant t₁, t₂, t₃ the time of a radar cycle passes. In this context, a radar cycle is one observation phase in which the radar system (2) is arranged to acquire data, process the data on several signal processing levels and send out available results. This can be a fixed time interval (i.e. 40 to 60 milliseconds), or it can be a dynamic time interval depending on environment conditions and processing load.

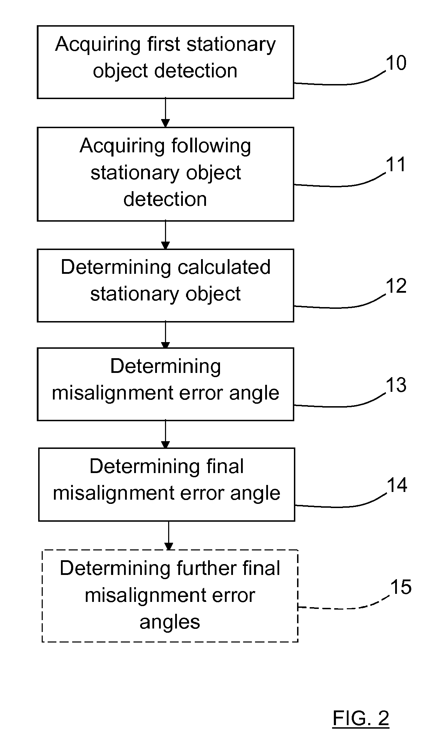

With reference to Figure 2, the present disclosure also relates to a method for a vehicle radar system 2 used for detecting objects outside a vehicle 1 and using a radar transceiver 3. The method is used for estimating a vehicle radar system misalignment, and comprises:
10: Acquiring a first stationary object detection 6 at a first time instant t₁ and providing a detected distance d₁ between the radar transceiver 3 and the first stationary object detection 6.
11: Acquiring at least one following stationary object detection 6', 6" for the same object at a corresponding following time instant t₂, t₃ for each following stationary object detection 6', 6".

For each following stationary object detection 6', 6", the method further comprises:
12: Determining a corresponding calculated stationary object 8 using said detected distance d₁ and vehicle data comprising at least present vehicle velocity vₕ.
13: Determining a misalignment error angle Δϕ₁, Δϕ₁ between a detection line 7', 7", running between the radar transceiver 3 and the present following stationary object detection 6', 6", and a calculated line 9, 9', running between the radar transceiver 3 and the corresponding calculated stationary object 8, 8'.

The method furthermore comprises:
14: Determining a final misalignment error angle Δϕ as a mean value of said misalignment error angles Δϕ₁, Δϕ₂.

According to some aspects, when a first final determined misalignment error angle Δϕ has been determined, the method further comprises:
15: Determining one or more further final misalignment error angles Δϕ by means of one or more corresponding repetitions of the procedure for determining the first final determined misalignment error angle Δϕ.

The present disclosure is not limited to the examples above, but may vary freely within the scope of the appended claims. For example, fence posts are only one example of suitable objects, any stationary object or objects within the radar transceiver's field of view 3 is/are suitable. This means that in the example above, the fence post detections are generally constituted by stationary object detections and the calculated fence posts are generally constituted by calculated stationary object.

The microwave parts of the radar system 2 are assumed to be of a previously known design, and the radar system 2 comprises more parts than shown; the radar transceiver comprises both a radar transmitter and radar receiver with accompanying respective parts. The radar system 2 may furthermore comprise a number of other parts, and is for example connected to a warning and/or information device comprised in the vehicle 1 in a previously known manner.

All details given in the example of course only given as an illustration of the present disclosure, and should not be regarded as limiting in any way. The radar transceiver 3 is shown to detect objects at the rear, but could be arranged for detection of objects in any suitable way.

The number of radar cycles and detections used for determining a mean value of the misalignment error angles Δϕ₁, Δϕ₂ may be of any suitable value.

The processing unit 4 may be comprised by one or more separate units, where, in the latter case, the units can be placed at one and the same place or at different places.

Generally, the present disclosure relates to a vehicle radar system 2 arranged to detect objects outside a vehicle 1, the radar system 2 comprising a radar transceiver 3 and a processing unit 4, where the radar transceiver 3 is arranged to:
acquire a first stationary object detection 6 at a first time instant t₁ and to provide a detected distance d₁ between the radar transceiver 3 and the first stationary object detection 6, acquire at least one following stationary object detection 6', 6" for the same object at a corresponding following time instant t₂, t₃ for each following stationary object detection 6', 6".
   For each following stationary object detection 6', 6" the processing unit 4 is arranged to:
   determine a corresponding calculated stationary object 8 by means of said detected distance d₁ and vehicle data comprising at least present vehicle velocity vₕ,
   determine a misalignment error angle Δϕ₁, Δϕ₁ between a detection line 7', 7", running between the radar transceiver 3 and the present following stationary object detection 6', 6", and a calculated line 9, 9', running between the radar transceiver 3 and the corresponding calculated stationary object 8, 8',
   where the processing unit 4 furthermore is arranged to determine a final misalignment error angle Δϕ as a mean value of said misalignment error angles Δϕ₁, Δϕ₂.

According to an example, said vehicle data also comprises yaw rate.

According to an example, when a first final determined misalignment error angle Δϕ has been determined, the processing unit 4 is arranged to determine one or more further final misalignment error angles Δϕ by means of one or more corresponding repetitions of the procedure for determining the first final determined misalignment error angle Δϕ.

According to an example, said repetition either is performed immediately after when a final determined misalignment error angle Δϕ has been determined, or after a certain delay.

According to an example, between each time instant t₁, t₂, t₃ the time of a radar cycle passes, where a radar cycle is one observation phase during which the vehicle radar system 2 is arranged to acquire data, process said data on several signal processing levels and to send out available results.

Generally, the present disclosure also relates to a method for a vehicle radar system 2 used for detecting objects outside a vehicle 1 and using a radar transceiver 3, where the method comprises:
10: acquiring a first stationary object detection 6 at a first time instant t₁ and providing a detected distance d₁ between the radar transceiver 3 and the first stationary object detection 6; and
11: acquiring at least one following stationary object detection 6', 6" for the same object at a corresponding following time instant t₂, t₃ for each following stationary object detection 6', 6".

For each following stationary object detection 6', 6", the method further comprises:
12: determining a corresponding calculated stationary object 8 using said detected distance d₁ and vehicle data comprising at least present vehicle velocity vₕ, and
13: determining a misalignment error angle Δϕ₁, Δϕ₁ between a detection line 7', 7", running between the radar transceiver 3 and the present following stationary object detection 6', 6", and a calculated line 9, 9', running between the radar transceiver 3 and the corresponding calculated stationary object 8, 8';
where the method furthermore comprises:
14: determining a final misalignment error angle Δϕ as a mean value of said misalignment error angles Δϕ₁, Δϕ₂.

According to an example, said vehicle data also comprises yaw rate.

According to an example, when a first final determined misalignment error angle Δϕ has been determined, the method comprises:
15: determining one or more further final misalignment error angles Δϕ by means of one or more corresponding repetitions of the procedure for determining the first final determined misalignment error angle Ocp.

According to an example, that said repetition either is performed immediately after when a final determined misalignment error angle Δϕ has been determined, or after a certain delay.

According to an example, between each time instant t₁, t₂, t₃ the time of a radar cycle passes, where a radar cycle is one observation phase during which the vehicle radar system 2 is used for acquiring data, processing said data on several signal processing levels and sending out available results.

## Claims

**1.** A vehicle radar system (2) arranged to detect objects outside a vehicle (1), the radar system (2) comprising a radar transceiver (3) and a processing unit (4), where the radar transceiver (3) is arranged to:
acquire a first stationary object detection (6) at a first time instant (t₁) and to provide a detected distance (d₁) between the radar transceiver (3) and the first stationary object detection (6),
acquire at least one following stationary object detection (6', 6") for the same object at a corresponding following time instant (t₂, t₃) for each following stationary object detection (6', 6"),
**characterized in that** for each following stationary object detection (6', 6") the processing unit (4) is arranged to:
determine a corresponding calculated stationary object (8) by means of said detected distance (d₁) and vehicle data comprising at least present vehicle velocity (vₕ),
determine a misalignment error angle (Δϕ₁, Δϕ₁) between a detection line (7', 7"), running between the radar transceiver (3) and the present following stationary object detection (6', 6"), and a calculated line (9, 9'), running between the radar transceiver (3) and the corresponding calculated stationary object (8, 8'),
where the processing unit (4) furthermore is arranged to determine a final misalignment error angle (Δϕ) as a mean value of said misalignment error angles (Δϕ₁, Δϕ₂).

**2.** A vehicle radar system according to claim 1, **characterized in that** said vehicle data also comprises yaw rate.

**3.** A vehicle radar system according to any one of the claims 1 or 2, **characterized in that** when a first final determined misalignment error angle (Δϕ) has been determined, the processing unit (4) is arranged to determine one or more further final misalignment error angles (Δϕ) by means of one or more corresponding repetitions of the procedure for determining the first final determined misalignment error angle (Δϕ).

**4.** A vehicle radar system according to claim 3, **characterized in that** said repetition either is performed immediately after when a final determined misalignment error angle (Δϕ) has been determined, or after a certain delay.

**5.** A vehicle radar system according to any one of the previous claims 1 or 2, **characterized in that** between each time instant (t₁, t₂, t₃) the time of a radar cycle passes, where a radar cycle is one observation phase during which the vehicle radar system (2) is arranged to acquire data, process said data on several signal processing levels and to send out available results.

**6.** A method for a vehicle radar system (2) used for detecting objects outside a vehicle (1) and using a radar transceiver (3), where the method comprises:
(10) acquiring a first stationary object detection (6) at a first time instant (t₁) and providing a detected distance (d₁) between the radar transceiver (3) and the first stationary object detection (6); and
(11) acquiring at least one following stationary object detection (6', 6") for the same object at a corresponding following time instant (t₂, t₃) for each following stationary object detection (6', 6");
**characterized in that** for each following stationary object detection (6', 6"), the method further comprises:
(12) determining a corresponding calculated stationary object (8) using said detected distance (d₁) and vehicle data comprising at least present vehicle velocity (vₕ), and
(13) determining a misalignment error angle (Δϕ₁, Δϕ₁) between a detection line (7', 7"), running between the radar transceiver (3) and the present following stationary object detection (6', 6"), and a calculated line (9, 9'), running between the radar transceiver (3) and the corresponding calculated stationary object (8, 8');
where the method furthermore comprises:
(14) determining a final misalignment error angle (Δϕ) as a mean value of said misalignment error angles (Δϕ₁, Δϕ₂).

**7.** A method according to claim 6, **characterized in that** said vehicle data also comprises yaw rate.

**8.** A method according to any one of the claims 6 or 7, **characterized in that** when a first final determined misalignment error angle (Δϕ) has been determined, the method comprises:
(15) determining one or more further final misalignment error angles (Δϕ) by means of one or more corresponding repetitions of the procedure for determining the first final determined misalignment error angle (Δϕ).

**9.** A method according to claim 8, **characterized in that** that said repetition either is performed immediately after when a final determined misalignment error angle (Δϕ) has been determined, or after a certain delay.

**8.** A method according to any one of the claims 6-9, **characterized in that** between each time instant (t₁, t₂, t₃) the time of a radar cycle passes, where a radar cycle is one observation phase during which the vehicle radar system (2) is used for acquiring data, processing said data on several signal processing levels and sending out available results.
